# EUROPEAN PATENT SPECIFICATION

(11) **EP 3 603 944 B1**
(45) Date of publication and mention of the grant of the patent: **04.05.2022**
(21) Application number: 18735620.9
(22) Date of filing: 27.03.2018
(51) Int. Cl.: B29C 70/32, B29C 70/48, B60B 5/02, B29C 70/86, B29C 70/22, B29L 31/32, B29K 705/00, B60B 3/08, B60B 3/12

(54) **METHOD AND SYSTEM FOR MANUFACTURING A REVOLVING BODY WITH GLASS FIBER AND CARBON FIBER AND RESULTING REVOLVING BODY**
VERFAHREN UND SYSTEM ZUR HERSTELLUNG EINES DREHKÖRPERS MIT GLASFASER UND KOHLENSTOFFFASER UND RESULTIERENDER DREHKÖRPER
PROCÉDÉ ET SYSTÈME DE FABRICATION D'UN CORPS DE RÉVOLUTION AVEC DE LA FIBRE DE VERRE ET DE LA FIBRE DE CARBONE, ET CORPS DE RÉVOLUTION RÉSULTANT

(30) Priority: 31.03.2017 ES 201730539
(43) Date of publication of application: 05.02.2020
(73) Proprietor: Wanaka Management, S.L., 08008 Barcelona (ES); Gescoperlab, S.L., 08925 Sant Vicenç de Castellet, Barcelona (ES)
(72) Inventor: SOLER MIRALLES, Carles, 08240 Barcelona (ES)
(74) Representative: Isern Patentes y Marcas S.L.
(86) International application number: PCT/ES2018/070257
(87) International publication number: WO 2018/178472

(56) References cited:
- US-A1- 2005 104 441
- US-A1- 2007 272 346

## Description

### OBJECT OF THE INVENTION

The object of the present patent application is to register a method and system for manufacturing a revolving body with glass fiber and carbon fiber and resulting revolving body which includes notable innovations and advantages with respect to the techniques used up to now.

More specifically, the invention proposes the development of a method and system for manufacturing a revolving body with glass fiber and carbon fiber and resulting revolving body which, due to its arrangement, allows for the attainment of a revolving body made of glass fiber and also equipped with carbon fiber reinforcements arranged in a more suitable manner to notably increase its features with respect to different mechanical applications without this involving an impairment of other features or qualities, such as for example weight, manufacturing time, etc.

### BACKGROUND OF THE INVENTION

Carbon fiber is known in the current prior art such as a synthetic fiber formed by fine filaments of 5-10 µm diameter and mainly composed of carbon.

Each carbon fiber is the combination of thousands of carbon filaments. It is a synthetic fiber because it is manufactured from polyacrylonitrile. It has mechanical properties similar to steel and is as light as wood or plastic and, due to its hardness, it has a greater resistance to impact than the steel.

The atomic structure of the carbon fiber is similar to graphite, consisting of layers of carbon atoms ordered in a hexagonal regular pattern. However, the difference is in the way in which these sheets intersect. Graphite is a crystalline material in which the sheets are situated parallel to one another in a regular manner. The chemical bonds between the sheets is relatively weak which provides the graphite with its softness and bright characteristics.

Whereas, carbon fiber is an amorphous material: the layers of carbon atoms are placed randomly, tightly or together. This integration of the layers of carbon is responsible for its high resistance.

The main properties of this composite material are:
- Very high mechanical resistance with a high elasticity modulus.
- Low density, in comparison to other materials such as for example steel.
- High production price.
- Resistance to external agents.
- High thermal isolation capacity.
- Resistance to temperature variations, preserving its shape, only if a thermostable matrix is used.

Carbon fiber is considerably stronger and lighter in comparison to other traditional materials. Its resistance is almost three times greater than that of steel and its density is 4.5 times lower. Its structural design is flexible. It has chemical resistance and non-corrosive properties as well as good thermal and electric conductivity properties.

Carbon fiber has been shown to be extremely useful as a reinforcing material for producing composite materials. Carbon fiber can be applied to components where lightness and strength are necessary, such as for example:
- Central section and other parts of airplanes.
- Windmill blades.
- Military applications.
- Decorations.
- Sports articles (tennis racquets, fishing rods, golf clubs, etc.).
- Automobile (sports vehicles, brakes and other parts, etc.).
- Others (bicycle frames, pressure vessels, mixture for concrete, etc.).

In the automotive sector, the replacement of parts manufactured with conventional materials with parts manufactured with composite materials contributes to reducing the weight of the vehicle, greater efficiency in the consumption of fuel and an improvement in the ratio between power and weight of the vehicle, which translates into better performance of the vehicle.

Historically, the use of composite materials in the automotive sector has been limited due, mainly, to the cycle times (production capacities). However, new regulations directly affecting CO₂ emissions are driving the use of composite materials in this sector. One of the more effective strategies when the manufacturers of vehicles face the challenge of reducing CO₂ emissions is reducing the weight of the vehicle where composite materials play an important role.

Technology has revolutionized the manufacturing processes of automobiles, allowing components such as carbon fiber to be included in parts of cars when, up to a few years ago, it was unthinkable to make them out of carbon fiber.

In the particular case of the wheels of the vehicles, the use of carbon fiber is especially important because the weight of an element in direct contact with the asphalt is significantly reduced. Reducing the mass of this element allows the dynamics, the direction and the response time of the suspension to be improved in the car.

In general, reducing the weight of the car is already positive, but in the wheels, if possible, it is more important. Less suspended weight allows the lap times to be improved, while reducing the inertia and most importantly, means the suspension does not have as much work in order to maintain the contact of the car with the ground on complex surfaces.

The tests which the wheels with carbon fiber have to overcome are exactly the same as conventional tests: tests against curbs, exposure to ultraviolet rays, chemical exposure and extreme heat, etc.

In the prior art, the filament winding process is also known which is a manufacturing technique for the production of composite materials, generally in the form of cylindrical structures which can be applied in the proposed invention. It consists of rolling filaments subjected to various tensions on a male mold or mandrel. The mandrel rotates while a carriage moves horizontally, depositing the fibers according to the desired pattern. The most common filaments are carbon or glass and are embedded in synthetic resin while they are deposited and rolled. The final result is an extremely efficient process for creating composite materials at low cost which are light and strong.

This process is already used, for example, to produce large reservoirs, chemical tanks and fuel storage, tubes or pressure vessels with high resistance, such as the pipes of engines for rockets for example. US2007272346 A1 discloses a system and method for wrapping fabric around a mandrel including providing a drum of fabric and a mandrel, removing a portion of the fabric from the drum and securing the fabric to the mandrel, rotating the mandrel such that the fabric wraps around the mandrel, and applying pressure to the fabric as the fabric is being wrapped around the mandrel to consolidate the fabric about the mandrel.

The resin transfer method (RTM) is known in the prior art which can also be generally applied in the proposed invention.

It is a closed mold manufacturing process at low pressure and is normally formed of two parts, female and male and can be summarized in five steps:
- placing a dry fiber fabric (glass fiber, carbon fiber, aramid, etc.), in a mold and it is closed using mechanical forces such as a hydraulic press, screws, bolts or vacuum).
- injecting resin into the mold by means of a pump such that the fiber fabric is impregnated and the cavities of the mold are filled.
- drying the resin inlet and air outlet.
- heat application to cure the resin.
- when the necessary time has passed, the mold is opened and the part removed.

Therefore, due to the possibility of molding the dry fibers before the injection of the resin, better orientation of the fibers is achieved, increasing the mechanical properties of the material.

This process is used at present and mainly for the manufacture of large production runs and in sectors such as for example the automobile, aeronautical or wind sector amongst others.

The present invention contributes to solving and resolving the present problem, since, due to its particular arrangement, it allows the attainment of a revolving body made of glass fiber and also equipped with carbon fiber reinforcements arranged in a more suitable manner to notably increase its features with respect to different mechanical applications without this involving an impairment of other features or qualities, such as for example weight, manufacturing time, etc.

### DESCRIPTION OF THE INVENTION

The present invention has been developed with the aim of providing a method for manufacturing a revolving body with glass fiber and carbon fiber which is essentially characterized in that it comprises:
a) initially fixing a glass fiber layer in its initial contact section on a drum which rotates on its own axial axis.
b) supplying and rolling the glass fiber layer on the drum and with an orientation of the threads of the glass fiber layer supplied parallel or oblique to the axial axis of said drum.
c) interrupting the supply and rolling of the layer.
d) sectioning the layer.
e) introducing and pressing formed lateral molds in the axial direction of a glass fiber roll resulting from the previous steps and adhered to the drum, said axial direction coinciding with the direction of the axial axis of the drum.
f) initially fixing at least one carbon fiber thread in its initial contact section on the roll
g) supplying and rolling the carbon fiber thread around and on at least one section of the formed surface of the roll, the orientation of the carbon fiber threads being perpendicular to the axial axis of the drum.
h) together with the supply and rolling of the carbon fiber thread, guiding or distribution of the carbon fiber thread also takes place in the direction of the axial axis of the drum.
i) interrupting the supply and rolling of the carbon fiber threads.
j) sectioning the carbon fiber threads supplied.
k) pressing the resulting roll on counter molds maintaining the shape produced.
l) heating and subsequently cooling the roll with glass fiber and carbon fiber.
m) removing the counter molds and the lateral molds and the drum.
n) extracting a resulting first revolving body of glass fiber and carbon fiber.

Additionally, in the method for manufacturing a revolving body with glass fiber and carbon fiber, the initial fixing of the glass fiber layer in its initial contact section on the drum is carried out by means of generating a vacuum in the drum itself.

Alternatively, in the method for manufacturing a revolving body with glass fiber and carbon fiber, the initial fixing of the glass fiber layer in its initial contact section on the drum is carried out by means of the use of a gluing means.

Alternatively, in the method for manufacturing a revolving body with glass fiber and carbon fiber, the sectioning of the glass fiber layer supplied is carried out by means of the use of a rotating blade.

Alternatively, in the method for manufacturing a revolving body with glass fiber and carbon fiber, the initial fixing of carbon fiber thread in its initial contact section on the roll takes place by means of a system of magnets or electromagnetically.

Alternatively, in the method for manufacturing a revolving body with glass fiber and carbon fiber, the supply and rolling of the carbon fiber thread around and on at least one section of the formed surface of the roll takes place by means of a filament winding process.

Alternatively, in the method for manufacturing a revolving body with glass fiber and carbon fiber, the heating of the roll with glass fiber and carbon fiber takes place with air at 100°C.

Alternatively, in the method for manufacturing a revolving body with glass fiber and carbon fiber, the heating and subsequent cooling of the roll with glass fiber and carbon fiber takes place after impregnation with a binder.

Additionally, the method for manufacturing a revolving body with glass fiber and carbon fiber also comprises inserting an already manufactured disc preform which is added and adjusted concentrically to the first revolving body on its interior contour, said already manufactured disc preform having a sandwich structure with an interior disc piece and another exterior disc piece both made of carbon fiber and between which there is a central metal piece.

Additionally, the method for manufacturing a revolving body with glass fiber and carbon fiber also comprises the manufacture of a disc preform which, in turn, comprises:
a) positioning an interior disc piece of carbon fiber, concentric and fitted in the interior contour of the first revolving body.
b) positioning a central metal piece, concentric to the first revolving body and on the interior disc piece arranged previously.
c) injecting polyurethane foam or similar on the interior disc piece.
d) positioning another exterior disc piece of carbon fiber, concentric to the first revolving body and on the central piece arranged previously, and coupled and fitted in the interior disc piece.

Additionally, the method for manufacturing a revolving body with glass fiber and carbon fiber also comprises:
a) positioning an interior mold in the interior and adapted to the interior contour of the first revolving body.
b) positioning a plurality of external molds adjusted and adapted on the exterior contour of the first revolving body and on the uncovered face of the exterior disc piece.
c) sealing between the interior disc piece and exterior disc piece and the first revolving body itself.
d) pressure-injecting a resin between the interior disc piece and exterior disc piece and the first revolving body itself.
e) removing the interior mold and the external molds.
f) extracting a resulting revolving composite body.

Alternatively, in the method for manufacturing a revolving body with glass fiber and carbon fiber, the interior disc piece, and/or the central piece and/or the exterior disc piece are obtained by means of previous stamping.

Alternatively, in the method for manufacturing a revolving body with glass fiber and carbon fiber, the resin is epoxy or similar.

The invention is also defined by a system for manufacturing a revolving body with glass fiber and carbon fiber, suitable for executing a method of the invention comprising:
- a glass fiber layering unit.
- a carbon fiber wrapping unit.
- a heat exchange unit.
and which is essentially characterized in that:
- the glass fiber layering unit comprises:
- means for supplying a glass fiber layer and a drum rotating on its axial axis, the supply means and the rotating drum being arranged and connected to one another for the rolling on the rotating drum of the glass fiber layer supplied from the supply means, the orientation of the thread of the glass fiber layer being supplied parallel or oblique to the axial axis and rotation of the drum.
- means for fixing the first and last glass fiber layer.
- means for sectioning the glass fiber layer supplied from the supply means;
- the carbon fiber wrapping unit comprises:
- supply means of at least one carbon fiber thread around and on at least one section of the lateral surface of the resulting glass fiber roll, the carbon fiber threads being supplied perpendicular to the threads of the glass fiber layer of the roll rolled on the drum.
- means for fixing the first carbon fiber thread.
- means for sectioning the carbon fiber thread;
- the heat exchange unit comprises:
- molding means enabled for its introduction and pressing from a lateral position in the axial direction of the resulting glass fiber roll,
- means for heating from the interior and exterior of the glass fiber roll.

Alternatively, in the system for manufacturing a revolving body with glass fiber and carbon fiber, the sectioning means comprise a circular blade.

Alternatively, in the system for manufacturing a revolving body with glass fiber and carbon fiber, the drum has holes in its lateral surface and the layering unit also comprises means for empting the interior of the drum.

Alternatively, in the system for manufacturing a revolving body with glass fiber and carbon fiber, the wrapping unit comprises guide means of the carbon fiber threads in the direction of the axial axis of the drum.

Additionally, the system for manufacturing a revolving body with glass fiber and carbon fiber also comprises:
- an interior mold adapted to the interior contour of the first revolving body.
- a plurality of external molds adapted to the exterior contour of the first revolving body and to the uncovered face of the exterior disc piece and enabled for its pressing.
- means for heating and injecting resin.

Alternatively, in the system for manufacturing a revolving body with glass fiber and carbon fiber, the external molds are a membrane adaptable by air pressure to the interior mold.

Alternatively, in the system for manufacturing a revolving body with glass fiber and carbon fiber, the glass fiber layering unit, the carbon fiber wrapping unit and the heat exchange unit are displaceable on guides and with a mutual position variable between them.

Alternatively, the system for manufacturing a revolving body with glass fiber and carbon fiber includes means for inserting foam or similar into at least one space comprised between the interior disc piece and the exterior disc piece.

The invention is also defined by a first revolving body with glass fiber and carbon fiber resulting from a method for manufacturing of the invention, which is formed by a roll resulting from rolling and superimposing a glass fiber layer rolled around an axial axis, the threads of the glass fiber layer being parallel or oblique to said axial axis and which is essentially characterized in that it comprises at least one carbon fiber thread arranged, rolled and adhered on the lateral surface of the glass fiber roll and surrounding the lateral surface of glass fiber roll, the carbon fiber threads being perpendicular or oblique to the threads of the glass fiber of the roll and therefore there being no parallelism between them.

Alternatively, the first revolving body with glass fiber and carbon fiber has a bottle-type geometry or similar, and enabled for carrying fluids in its interior.

Alternatively, the first revolving body with glass fiber and carbon fiber also has a disc preform adjusted concentrically on the interior contour of a first revolving body of the invention and, in turn, said disc preform comprising an inserted interior disc piece of carbon fiber concentric to and fitted in the interior contour of the first revolving body, a central metal piece concentric to said first revolving body and arranged on the interior disc piece and another exterior disc piece of carbon fiber concentric to the same first revolving body and arranged on the central piece and coupled and fitted in the interior disc piece.

Alternatively, the first revolving body with glass fiber and carbon fiber includes a foam or similar in at least one space comprised between the interior disc piece and the exterior disc piece.

Alternatively, the first revolving body with glass fiber and carbon fiber is a tire integrating an automotive wheel or similar, the central piece having screw elements enabled for its fixing on the vehicle.

Owing to the present invention, the attainment of a revolving body made of glass fiber and also equipped with carbon fiber reinforcements arranged in a more suitable manner to notably increase its features with respect to different mechanical applications without this involving an impairment of other features or qualities, such as for example weight, manufacturing time, etc.

Other characteristics and advantages of the method and system for manufacturing a revolving body with glass fiber and carbon fiber and a resulting revolving body will be evident from the description of a preferred, but nonexclusive embodiment, which is illustrated by way of non-limiting example in the drawings which are enclosed, in which:

### BRIEF DESCRIPTION OF THE DRAWINGS

Figures 1, 3 and 5 are schematic and sequential views of preferred embodiments of the method for manufacturing a revolving body with glass fiber and carbon fiber of the present invention.
Figure 2 is a schematic view of a detail of the fixing of a glass fiber layer on the drum, a preferred embodiment of the method and the system for manufacturing a revolving body with glass fiber and carbon fiber of the present invention.
Figure 4 is a schematic view of the introduction of a material in the manner of foam into the spaces between the interior disc piece and the exterior disc piece in a preferred embodiment of the method and system for manufacturing a revolving body with glass fiber and carbon fiber of the present invention.
Figure 6 is a schematic view of the arrangement in its operation of the interior mold and the exterior molds of a preferred embodiment of the method and system for manufacturing a revolving body with glass fiber and carbon fiber of the present invention.
Figure 7 is a schematic view of an embodiment of the system for manufacturing a revolving body with glass fiber and carbon fiber of the present invention.
Figure 8 is a schematic view of the layering unit of an embodiment of the system for manufacturing a revolving body with glass fiber and carbon fiber of the present invention.
Figure 9 is a schematic view from different perspectives of the wrapping unit of a preferred embodiment of the system for manufacturing a revolving body with glass fiber and carbon fiber of the present invention.
Figure 10 is a schematic view of the heat exchange unit of an embodiment of the system for manufacturing a revolving body with glass fiber and carbon fiber of the present invention.
Figure 11 is a schematic view of a preferred embodiment of the first revolving body with glass fiber and carbon fiber of the present invention.
Figure 12 is a schematic view of a preferred embodiment of the revolving composite body with glass fiber and carbon fiber of the present invention and in the manner of a tire for automotive wheels.
Figure 13 is a schematic view in greater detail of the fitting and coupling of the interior disc piece, the central piece and the exterior disc piece in the first revolving body, all integrated in the composite revolving body in the manner of a tire for automotive wheels.
Figure 14 is a schematic view of the space filled with foam between the interior disc piece and exterior disc piece of the revolving composite body in the manner of a tire.

### DESCRIPTION OF A PREFERRED EMBODIMENT

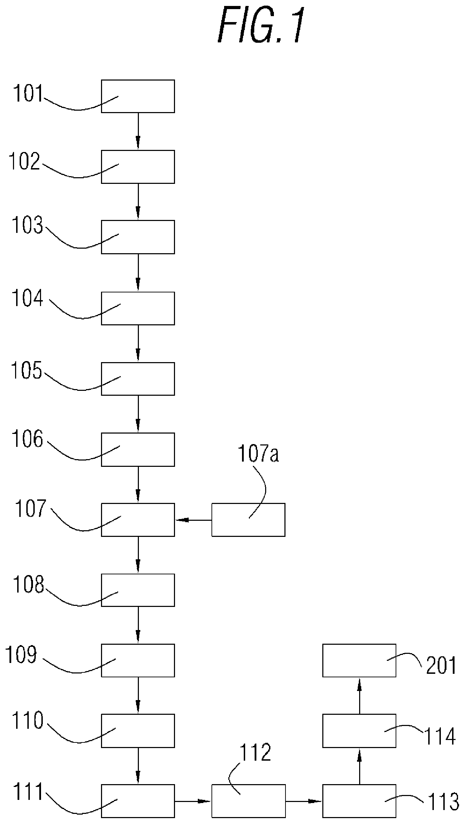

As is shown in the schematic representation of Figure 1, the method for manufacturing a revolving body with glass fiber and carbon fiber comprises different successive steps.

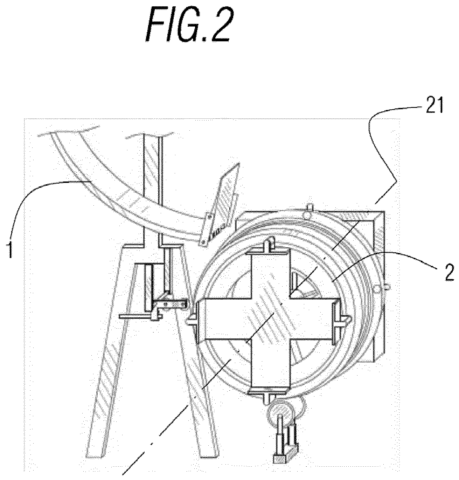

Firstly, fixing 101 takes place in its initial contact section of an initial glass fiber layer 1 on a drum 2, as is also represented schematically in Figure 2. As is included in the resin transfer method which can also be used in the method of the present invention as is explained below and even as is mentioned in the background of the present invention, the glass fiber of the layer 1 applied on the drum 2 is dry and has no prior treatment. This contributes to an improvement in the economic cost of the method for manufacturing a revolving body with glass fiber and carbon fiber of the proposed invention.

Said fixing 101 is preferably carried out with pneumatic means. In other preferred embodiments, said initial fixing 101 can be carried out by means of generating a vacuum in the drum 2 itself or by means of the use of a gluing means to adhere the initial contact section of the glass fiber layer 1 to the drum 2 itself.

Supplying and rolling 102 of the same glass fiber layer 1 then takes place on the drum 2.

Said supplying and rolling 102 is maintained until the required thickness on the same drum 2 is obtained, as can be schematically discerned in Figure 2.

The drum 2 rotates on its own axial axis 21 and with an orientation of the threads of the glass fiber layer 1 supplied parallel or with a certain obliqueness to the axial axis 21 of the drum 2 on which it is rolled and thus gives the resulting roll 3 orthotropic properties.

Following successive passes during the rolling of the glass fiber layer 1 on the drum 2, an interruption 103 in the supply and rolling 102 of the glass fiber layer 1 is carried out.

Sectioning 104 of the supplied glass fiber layer 1 then takes place. Said sectioning 104 can be carried out by means of a rotating blade.

The different successive steps described above produce a resulting glass fiber roll 3, adhered to the drum 2.

Introduction and pressing 105 of lateral forming molds 51 in the resulting roll 3 then takes place by means of the use of compressors.

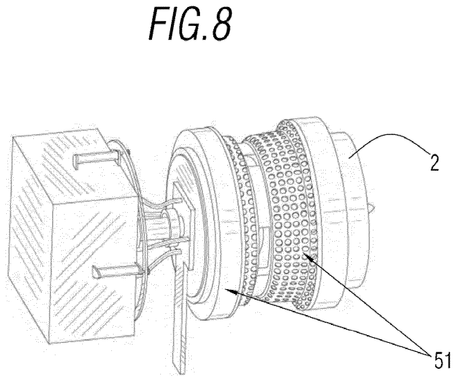

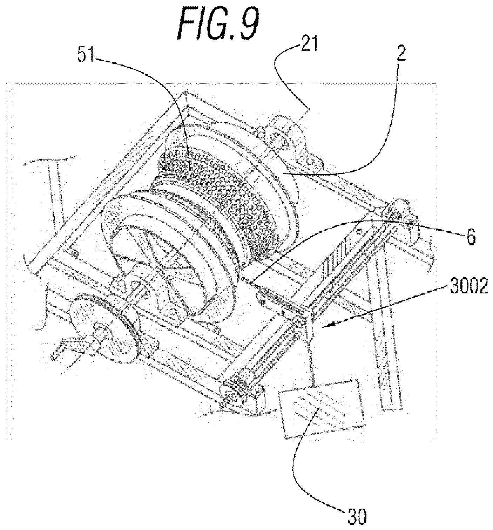

Said lateral forming molds 51 are introduced into the roll 3 in the axial direction of the roll 3 itself in order to thus give the resulting roll 3 a suitable shape. This can be carried out owing to the fact that the drum 2 has a cylindrical geometry, with its flat and smooth cylindrical lateral surface as can be discerned from Figures 8 and 9, and the axial directions of the roll 3 and the drum 2 coinciding as is detailed below.

Following the adoption of the final shape of the resulting roll 3 owing to the introduction and pressing 105 of the lateral molds 51, another initial fixing 106 (for example using a system of magnetic or electromagnetically) takes place and then a supply and rolling 107 of at least one carbon fiber thread 6 around and on at least one section of the formed surface of the roll 3. All of which can be carried out using a method known in the prior art as a filament winding process. According to what is established, in different preferred embodiments, the supply and rolling 107 of the carbon fiber thread 6 can be carried out around and on the full or partial extent of the formed surface of the roll 3.

Similar to what was initially explained, and as is included in the resin transfer method, which can also be used in the method of the present invention as is explained below and even as is mentioned in the background of the invention, the carbon fiber of the thread 6 applied on the roll 3 is dry and has no prior treatment. This contributes to an improvement in the economic cost of the method for manufacturing a revolving body with glass fiber and carbon fiber of the proposed invention.

Said supply and rolling 107 of the carbon fiber threads 6 takes place such that the orientation of the carbon fiber threads 6 is perpendicular to the axial axis 21 of the drum 2 on which it is rolled.

In said supply and rolling 107, guiding 107a or distribution of the carbon fiber thread 6 also takes place in the direction of the axial axis 21 of the drum 2, providing the required thickness in the sections of the formed surface of the roll 3 on which the carbon fiber threads 6 are rolled.

Following the supply and rolling 107 of the carbon fiber threads 6 and when the roll 3 with its carbon fiber threads 6 is already formed, the interruption 108 of supply and rolling 107 takes place and then the sectioning 109 of the carbon fiber threads 6.

Subsequently, pressing 110 of the resulting roll 3 takes place on counter molds 52 to maintain its generated shape.

Heating 111 of the roll 3 with glass and carbon fiber is then carried out using hot air at approximately 100°C to provide structural rigidity and consistency for the shape attained. Cooling 112 of the same roll 3 is then carried out.

In some preferred embodiments, according to the nature of the initial glass fiber or carbon fiber used, impregnation of these fibers can be carried out with a suitable binder before heating 111.

The removal 113 of the exterior counter molds 52 and of the forming molds 51 and the drum 2 then takes place from the interior of the initial roll 3. Said removal of the forming molds 51 and of the drum from the interior of the roll 3 can be carried out owing to the fact that the drum 2 has a cylindrical geometry with its flat and smooth cylindrical lateral surface as can be deduced from the Figures 8 and 9 and has been explained above. It is therefore not necessary to dismantle the forming molds 51 or the drum 2 for their removal 113.

Following the above, the extraction 114 of the first resulting revolving body 4 of glass fiber and carbon fiber takes place.

Owing to the manufacturing method described, and owing to the resulting crossed arrangement of the glass fibers and carbon fibers, the first resulting revolving body 4 has different mechanical properties according to the direction in which it is measured.

In other preferred embodiments, the method for manufacturing a revolving body with glass fiber and carbon fiber of the invention can also comprise some additional steps which result in the first revolving body 4 initially obtained being completed and transformed into a composite revolving body 5 which can be a tire of an automotive wheel or similar.

Therefore, insertion 201 of a disc preform 7 that was already previously manufactured takes place, as is indicated in the schematic representation of Figure 1 which is added and adjusted concentrically to the first revolving body 4 on its interior contour.

For its part, said already manufactured disc preform 7, in turn, has a sandwich structure with an interior disc piece 71 and another exterior disc piece 73, both made of carbon fiber and between which there is a central metal piece 72.

Said disc preform 7 incorporated in the first revolving body 4 means that said first revolving body 4 is complete and is transformed into the composite revolving body 5 previously referred to.

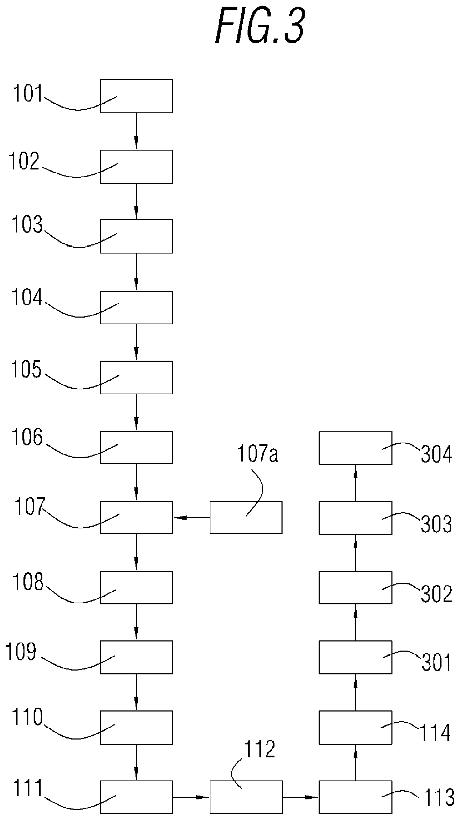

In other preferred and alternative embodiments, the manufacture of the disc preform 7 takes place in the same method of the invention, as is indicated schematically in Figure 3.

The case of manufacturing the disc perform 7 in the same method of the invention therefore involves the following other additional steps, represented schematically in Figure 3.

Positioning 301 of an interior disc piece 71 of carbon fiber obtained by means of stamping and concentrically to the first revolving body 4 which fits concentrically into the interior contour of said first revolving body 4.

Positioning 302 of a central metal piece 72 obtained by stamping and concentric to the first revolving body 4 and simultaneously on the interior disc piece 71 previously arranged.

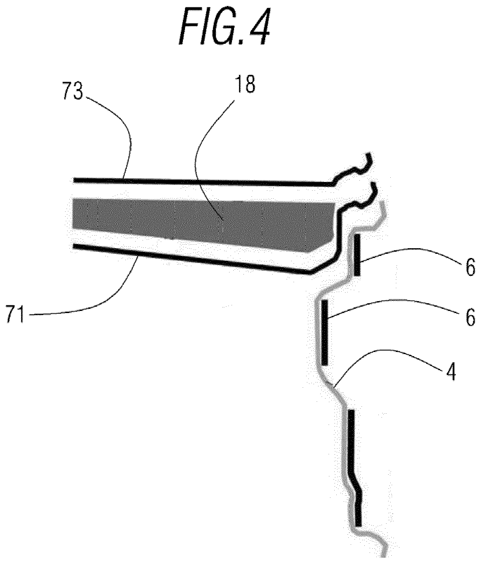

Then, injection 303 or introduction of polyurethane foam or similar on the interior disc piece 71, as is represented schematically in Figure 4.

Then, positioning 304 of another exterior disc piece 73 of carbon fiber obtained by means of stamping is carried out concentrically to the first revolving body 4 and on the central piece 72 previously arranged and coupled and fitted to the interior disc piece 71.

The foregoing produces the disc preform 7 arranged and adjusted concentrically on the interior contour of the first revolving body 4 with a sandwich structure of an interior disc piece 71 and another exterior disc piece 73 of carbon fiber with interior foam and a metallic disc piece 72 between the two.

The disc preform 7 described therefore has the advantage of being able to be modified according to different needs or features required, merely by altering or modifying any of its integral elements.

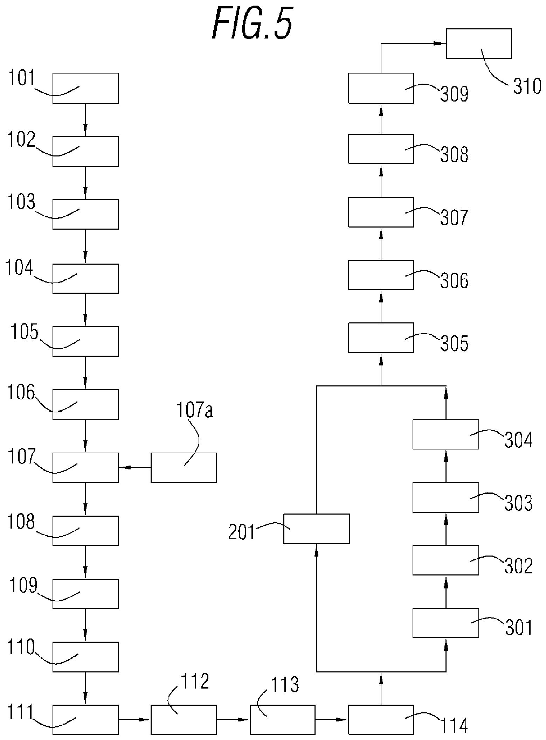

Figure 5 simultaneously represents the possibility of the disco preform 7 being manufactured in the same method of the invention (steps 301, 302, 303 and 304) or being incorporated in the method of the invention already manufactured externally (step 201). Both possibilities are included in the invention.

The invention proceeds below jointly based on the first revolving body 4 and the previous disc preform 7, whether or not the disc preform 7 is manufactured in the same method of the invention, as is represented schematically in said Figure 5, and in a preferred embodiment by means of a technique based on a resin transfer method.

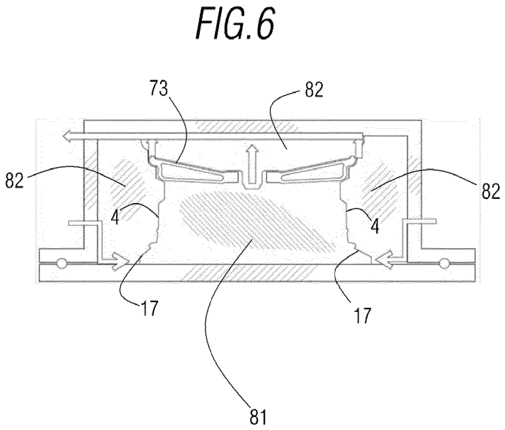

Therefore, positioning 305 of an interior mold 81 in the interior and adapted to the interior contour of the first revolving body 4 takes place, as can be discerned schematically in Figure 6.

After this, another arrangement 306 of a plurality of external molds 82 adjusted and adapted on the exterior contour of the first revolving body 4 and on the uncovered face of the exterior disc piece 73 takes place, as can also be discerned schematically in Figure 6.

The external molds 82 can comprise a membrane adaptable by air pressure to the interior mold 81 and therefore exhibits deformability. This provides the advantage of a considerable simplification, facilitating automatization of its use and its maintenance, in addition to less waste. It also provides assistance with a movement release in the axial direction, simply by eliminating the air pressure affecting said external molds 82.

Sealing 307 is then carried out prior to pressure injection 308 of a resin 17, for example epoxy, between the interior disc piece 71 and the exterior disc piece 73 and the first revolving body 4, as can also be schematically discerned in Figure 6.

The removal 309 of the interior mold 81 and of the external molds 82 then takes place and then extraction 310 of the resulting composite body 5. The presence of deformability in the external molds 82 can also even facilitate removal in the axial direction of said resulting composite body 5.

As has already been cited above, in a preferred embodiment, said resulting composite body 5 is a tire of an automotive wheel or similar.

The invention also includes a system suitable for the execution of the method previously described and with some of its elements already cited in the description already given of the method also included in the same invention.

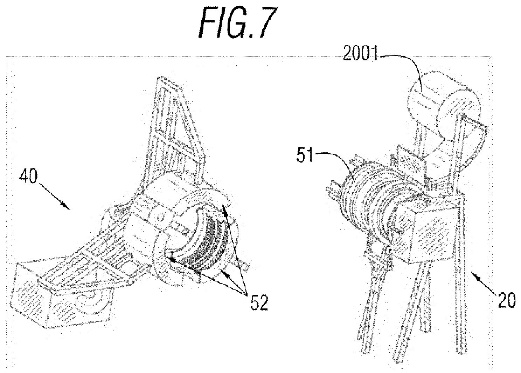

As is represented schematically in Figures 7 and 9, the system of the invention comprises a glass fiber layering unit 20, a carbon fiber wrapping unit 30 and a heat exchange unit 40.

In this preferred embodiment, the glass fiber layering unit 20, the carbon fiber wrapping unit 30 and the heat exchange unit 40 are displaceable on guides and with a mutual position variable between them.

As is represented in Figure 7 and from different perspectives, the glass fiber layering unit 20, in turn, comprises supply means 2001 of a glass fiber layer 1, a drum 2 rotating on its own axial axis 21 and which has a cylindrical geometry with a flat and smooth cylindrical lateral surface as can also be deduced from Figures 8 and 9 and as is explained previously. Said flat and smooth cylindrical lateral surface 2 facilitates the supply and rolling 102 of the glass fiber layer 1 on said drum 2 and also involves said glass fiber layer 1 undergoing fewer tensions during the supply and rolling 102.

The supply means 2001 and the rotating drum 2 are arranged and mutually connected for the rolling on the rotating drum 2 of the glass fiber layer 1 supplied from the supply means 2001 and the orientation of the threads of the glass fiber layer 1 being supplied parallel or oblique to the axial axis 21 and rotation of the drum 2, that is to say, not perpendicular.

The glass fiber layering unit 20 also comprises fixing means of the first and last fiber layer and sectioning means (in this case a circular blade) of the glass fiber layer 1 supplied from the supply means 2001.

In some preferred embodiments, as is represented schematically in Figure 8, the drum 2 has holes in its lateral surface and the layering unit 20 also comprises means for emptying the interior of the drum 2. The adhesion and fixing in its initial contact section of the glass fiber layer 1 is thereby ensured on the lateral surface of the drum 2.

In addition and as is represented schematically in Figure 9 and from different perspectives, the carbon fiber wrapping unit 30 comprises supply means 3001 of at least one carbon fiber thread 6 around and on at least one section of the lateral surface of the resulting glass fiber roll 3, therefore around and on the total or partial extent of the lateral surface of the roll 3, the carbon fiber threads 6 being supplied perpendicular to the axial axis 21 of the drum 2 and it also has fixing means of the initial thread 6 to the first revolving body 4 formed in glass fiber.

The wrapping unit 30 also comprises guide means 3002 of the carbon fiber threads 6 and in the direction of the axial axis 21 of the drum 2 to provide the thickness required in the sections of the formed surface of the roll 3 on which the carbon fiber threads 6 are rolled, as is schematically represented in Figure 9.

The wrapping unit 30 also comprises sectioning means 3003 of the carbon fiber thread 6.

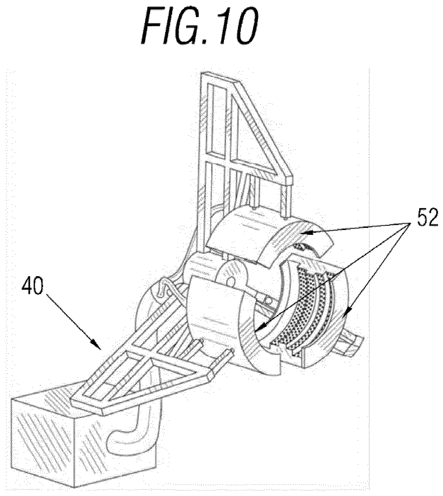

The heat exchange unit 40 schematically represented in Figure 10 comprises molding means enabled for their introduction and pressing from a lateral position in the axial direction of the resulting glass fiber roll 3 and means for heating from the interior and exterior of the glass fiber roll 3.

In another preferred embodiment of the system of the invention, it corresponds to the preferred embodiment of the method for manufacturing the composite body 5.

To this end, as is represented schematically in Figure 6, the system of the invention also comprises an interior mold 81 adapted to the interior contour of the first revolving body 4 and a plurality of external molds 82 adapted to the exterior contour of the first revolving body 4 and the uncovered face of the exterior disc piece 73 and enabled for its pressing and also comprises means for heating and injecting the resin 17.

This is possible, as has been outlined previously, owing to the fact that the external molds 82 comprises a membrane adaptable by air pressure and therefore they exhibit deformability. In order to eliminate the effect of the presence of said external molds 82, it is sufficient to eliminate the air pressure in the deformable membranes of said external molds 82. For example, in order to introduce or remove in the axial direction of the first revolving body 4 or composite body 5, it would help simply eliminating the air pressure in said external molds 82 for a release of said movement in the axial direction.

In other preferred embodiments, in the case that said resulting composite body 5 is a tire of an automotive wheel or similar, and the disc preform 7 is manufactured in the same first revolving body 4, the system of the invention includes means for inserting foam or similar in at least one space 18 comprised between the interior disc piece 71 and the exterior disc piece 73 and represented in Figure 4.

The invention also includes the first revolving body 4 already previously cited and resulting from the method and/or the system previously described and with some of its elements already cited in the description already given of the method and system of the same invention.

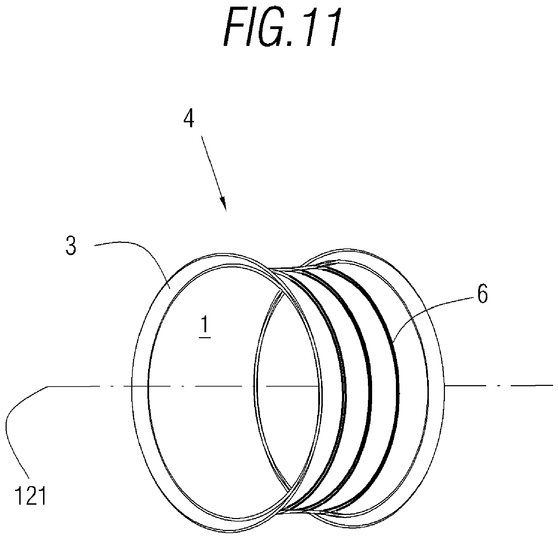

As is schematically represented in Figure 11, the first revolving body 4 is formed by a roll 3 resulting from a superimposition of a dry glass fiber layer 1 without prior treatment and rolled around an axial axis 121, the threads of the glass fiber layer 1 being parallel and oblique, that is to say, not parallel, to the axial axis 121 of said roll 3. In addition, it comprises at least one dry carbon fiber thread 6 without prior treatment arranged, rolled and adhered on the lateral surface of the glass fiber roll 3 and surrounding the lateral surface of the glass fiber roll 3. The threads of the carbon fiber 6 are perpendicular to the axial axis 121.

The method and the system of manufacturing of the present invention involves the axial axis 121 of the roll 3 coinciding with the axial axis 21 of the drum 2 used in the method and system for manufacturing described.

The described arrangement of the first revolving body 4 with the threads of the glass fiber of the layer 1 of the roll 3 and the threads of the carbon fiber 6 perpendicular or oblique, that is to say, not parallel to one another, give the first revolving body 4 increased resistance and at the same time with the resulting reduced weight, which considerably improves its features, and also gives the resulting first revolving body 4 orthotropic properties, that is to say, it has different mechanical properties according to the direction in which it is measured.

The first revolving body 4 can, inter alia, have a bottle-type geometry or similar. In such case, the features of high resistance and reduced weight of the resulting first revolving body 4 can be very useful in the case of bottles enabled for the carrying of fluids in their interior and in conditions of high pressure.

The invention also includes a revolving composite body 5. Said revolving composite body 5 comprises the foregoing first revolving body 4 which also includes a disc preform 7 adjusted concentrically on the interior contour of the first revolving body 4.

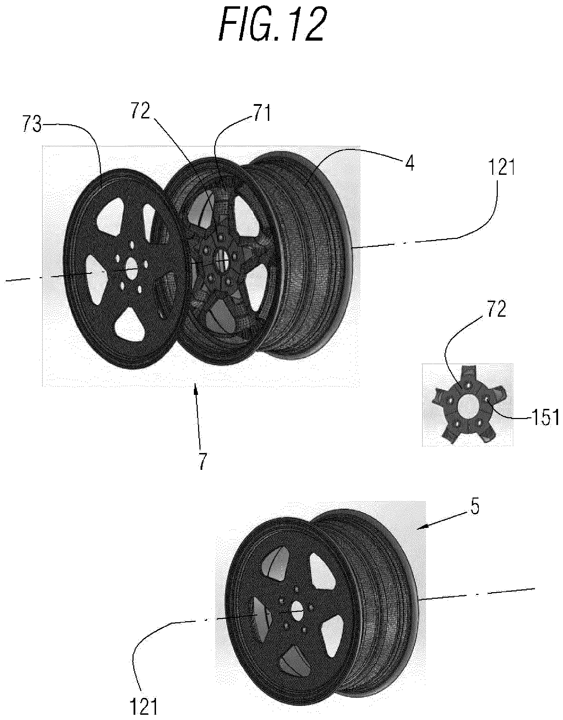

This arrangement represented schematically in Figure 12 produces a composite revolving body 5 achieved from the first revolving body 4.

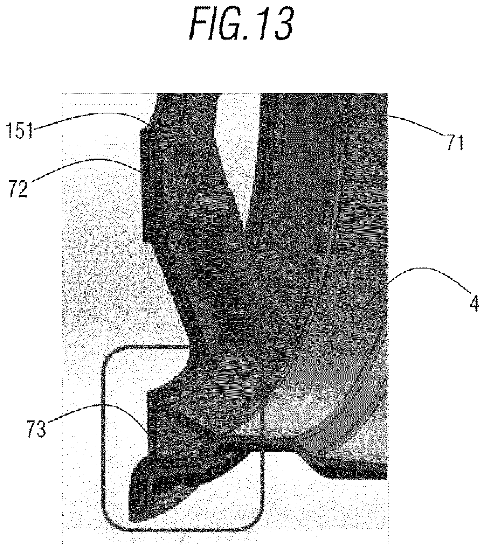

As is schematically represented in greater detail in Figure 13, the disc preform 7, in turn, comprises an interior disc piece 71 of carbon fiber inserted and concentric to the first revolving body itself 4, a central metallic reinforcing piece 72 concentric to said first revolving body 4 and arranged on the interior disc piece 71 and another exterior disc piece 73 of carbon fiber concentric to the same first revolving body 4 and arranged on the central piece 72 and the interior disc piece 71, in the sandwich structure. This arrangement explained and schematically represented in Figures 11 and 12 produces a composite body 5, achieved from the first revolving body 4.

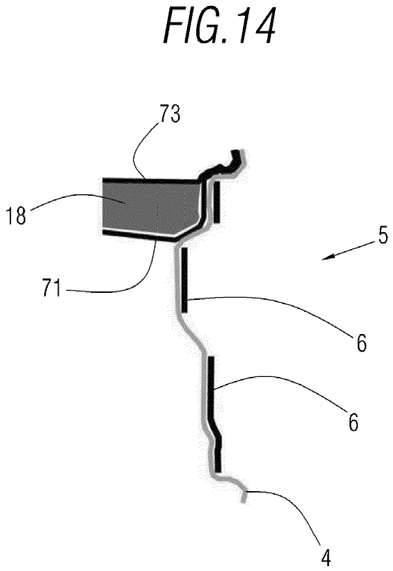

The coupling and fitting of the interior disc piece 71, the central piece 72 and the exterior disc piece 73 of the disc preform 7 in the first revolving body 4, all integrated in the composite body 5 are schematically represented in greater detail in Figure 14.

In addition, in this preferred embodiment, the composite body 5 corresponds to a tire integrating an automotive wheel or similar. In such case, the central piece 72 also includes screw elements 151 for its fixing on a vehicle, as is also represented schematically in Figure 12.

Also in the case of the composite body 5 corresponding to a tire, as is schematically represented in Figure 12, the exterior disc piece 73 is in the visible part of the tire, therefore exhibiting aesthetic functions and different exterior disc pieces 73 being able to be used interchangeably with one another according to the desired aesthetic appearance.

Also in this case, the space 18 between the interior disc piece 71 and the exterior disc piece 73 is filled with foam, as is schematically represented in Figure 14.

The details, the shapes, the dimensions and other accessory elements as well as the materials used in the method and system for manufacturing a revolving body with glass fiber and carbon fiber and resulting revolving body of the invention can be conveniently substituted by others which are technically equivalent and do not depart from the scope defined by the claims which are included below.

## Claims

1. A method for manufacturing a revolving body with glass fiber and carbon fiber, whereby it comprises:
a) initially fixing (101) a dry glass fiber layer (1) without prior treatment in its initial contact section on a drum (2) which rotates on its own axial axis (21) and which exhibits a cylindrical geometry with a flat and smooth cylindrical lateral surface.
b) supplying and rolling (102) the glass fiber layer (1) on the drum (2) and with an orientation of the threads of the glass fiber layer (1) supplied parallel or oblique to the axial axis (21) of said drum (2).
c) interrupting (103) the supply and rolling (102) of the layer (1).
d) sectioning (104) the layer (1).
e) introducing and pressing (105) formed lateral molds (51) in the axial direction of a glass fiber roll (3) resulting from the previous steps and adhered to the drum (2), said axial direction coinciding with the direction of the axial axis (21) of the drum (2).
f) initially fixing at least one dry carbon fiber thread (6) without prior treatment in its initial contact section on the roll (3).
g) supplying and rolling (107) the carbon fiber thread (6) around and on at least one section of the formed surface of the roll (3), therefore around and on the total or partial extent of the formed surface of the same roll (3), the orientation of the carbon fiber threads (6) being perpendicular to the axial axis (21) of the drum (2).
h) together with the supply and rolling (107) of the carbon fiber thread (6), guiding (107a) or distribution of the carbon fiber thread (6) also takes place in the direction of the axial axis (21) of the drum (2).
i) interrupting (108) the supply and rolling (107) of the carbon fiber threads (6).
j) sectioning (109) the carbon fiber threads (6) supplied.
k) pressing (110) the resulting roll (3) on counter molds (52) maintaining the shape produced.
l) heating (111) and subsequently cooling (112) the roll (3) with glass fiber and carbon fiber.
m) removing (113) the counter molds (52) and the lateral molds (51) and the drum (2).
n) extracting (114) a resulting first revolving body (4) of glass fiber and carbon fiber.

2. The method for manufacturing a revolving body with glass fiber and carbon fiber according to claim 1, **characterized in that** the initial fixing (101) of the glass fiber layer (1) in its initial contact section on the drum (2) is carried out by means of generating a vacuum in the drum (2) itself.

3. The method for manufacturing a revolving body with glass fiber and carbon fiber according to claim 1, **characterized in that** the initial fixing (101) of the glass fiber layer (1) in its initial contact section on the drum (2) is carried out by means of the use of a gluing means.

4. The method for manufacturing a revolving body with glass fiber and carbon fiber according to claim 1, **characterized in that** the sectioning (104) of the glass fiber layer (1) supplied is carried out by means of the use of a rotating blade; the initial fixing (106) of at least one carbon fiber thread (6) in its initial contact section on the roll (3) takes place by means of a system of magnets or electromagnetically; the supply and rolling (107) of the carbon fiber thread (6) around and on at least one section of the formed surface of the roll (3) takes place by means of a filament winding process; the heating (111) of the roll (3) with glass fiber and carbon fiber takes place with air at 100°C; the heating (111) and subsequent cooling (112) of the roll (3) with glass fiber and carbon fiber takes place following impregnation with a binder.

5. The method for manufacturing a revolving body with glass fiber and carbon fiber according to claim 1, **characterized in that** it further comprises insertion (201) of an already manufactured disc preform (7), which is added and adjusted concentrically to the first revolving body (4) on its interior contour, said already manufactured disc preform (7) having a sandwich structure with an interior disc piece (71) and another exterior disc piece (73) both made of carbon fiber, and between which a central metal piece (72) is located; and the interior disc piece (71) and/or the central piece (72) and/or the exterior disc piece (73) are obtained by means of prior stamping.

6. The method for manufacturing a revolving body with glass fiber and carbon fiber according to claim 1, **characterized in that** it also comprises the manufacturing of a disc preform (7), which, in turn, comprises:
a) positioning (301) an interior disc piece (71) of carbon fiber, concentric and fitted in the interior contour of the first revolving body (4).
b) positioning (302) a central metal piece (72), concentric to the first revolving body (4) and on the interior disc piece (71) arranged previously.
c) injecting (303) polyurethane foam or similar on the interior disc piece (71).
d) positioning (304) another exterior disc piece (73) of carbon fiber, concentric to the first revolving body (4) and on the central piece (72) arranged previously, and coupled and fitted in the interior disc piece (71).

7. The method for manufacturing a revolving body with glass fiber and carbon fiber according to claim 5 or 6, **characterized in that** it further comprises:
a) positioning (305) an interior mold (81) in the interior and adapted to the interior contour of the first revolving body (4).
b) positioning (306) a plurality of external molds (82) adjusted and adapted on the exterior contour of the first revolving body (4) and on the uncovered face of the exterior disc piece (73).
c) sealing (307) between the interior disc piece (71) and exterior disc piece (73) and the first revolving body (4) itself.
d) pressure-injecting (308) a resin (17) epoxy or similar between the interior disc piece (71) and the exterior disc piece (73) and the first revolving body (4) itself.
e) removing (309) the interior mold (81) and external molds (82).
f) extracting (310) a resulting revolving composite body (5).

8. A system for manufacturing a revolving body with glass fiber and carbon fiber suitable for the execution of the method of claim 1, which comprises:
- a glass fiber layering unit (20).
- a carbon fiber wrapping unit (30).
- a heat exchange unit (40).
and whereby
- the glass fiber layering unit (20) comprises:
- means for supplying (2001) a glass fiber layer (1) and a drum (2) rotating on its axial axis (21), which exhibits a cylindrical geometry with a flat and smooth cylindrical lateral surface, the supply means (2001) and the rotating drum (2) being arranged and mutually connected for the rolling on the rotating drum (2) of the glass fiber layer (1) supplied from the supply means (2001), the orientation of the threads of the glass fiber layer (1) being supplied parallel or oblique to the axial axis (21) and rotation of the drum (2).
- means for fixing the first and last glass fiber layer (1).
- means for sectioning the glass fiber layer (1) supplied from the supply means (2001);
- the carbon fiber wrapping unit (30) comprises:
- supply means (3001) of at least one carbon fiber thread (6) around and on at least one section of the lateral surface of the resulting glass fiber roll (3), the carbon fiber threads (6) being supplied perpendicular to the threads of the glass fiber layer (1) from the roll (3) rolled on the drum (2).
- fixing means of the first carbon fiber thread (6).
- sectioning means (3003) of the carbon fiber thread (6);
- the heat exchange unit (40) comprises:
- molding means to enable its introduction and pressing from a lateral position in the axial direction of the resulting glass fiber roll (3),
- means for heating from the interior and exterior of the glass fiber roll (3).

9. The system for manufacturing a revolving body with glass fiber and carbon fiber according to claim 8, **characterized in that** the sectioning means comprise a circular blade; the drum (2) has holes in its lateral surface, and the layering unit (20) further comprises means for emptying the interior of the drum (2) the wrapping unit (30) comprises guide means (3002) of the carbon fiber threads (6) in the direction of the axial axis (21) of the drum (2); the glass fiber layering unit (20), the carbon fiber wrapping unit (30) and the heat exchange unit (40) are displaceable on guides and with a mutual position variable between them.

10. The system for manufacturing a revolving body with glass fiber and carbon fiber according to claim 8, **characterized in that** it further comprises:
- an interior mold (81) adapted to the interior contour of the first revolving body (4).
- a plurality of external molds (82) adapted to the exterior contour of the first revolving body (4) and to the uncovered face of the exterior disc piece (73) and enabled for its pressing; and the external molds (82) comprise a membrane adaptable by air pressure to the interior mold (81) and therefore they exhibit deformability.
- means for heating and injecting resin (17).
- means for inserting foam or similar into at least one space (18) comprised between the interior disc piece (71) and the exterior disc piece (73).

11. A first revolving body with glass fiber and carbon fiber resulting from the method for manufacturing according to claim 1, which is formed by a roll (3) resulting from rolling and superimposing a dry glass fiber layer (1) without prior treatment and rolled around an axial axis (121), the threads of the glass fiber layer (1) being parallel or oblique to said axial axis (121), and whereby it comprises at least one dry carbon fiber thread (6) without prior treatment arranged, rolled and adhered on the lateral surface of the glass fiber roll (3) and surrounding the lateral surface of the glass fiber roll (3), the carbon fiber threads (6) being perpendicular or oblique to the glass fiber threads of the roll (3), and therefore there being no parallelism between them.

12. The first revolving body with glass fiber and carbon fiber according to claim 11, **characterized in that** it exhibits a bottle-type geometry or similar and is enabled for carrying fluids in its interior.

13. The first revolving body with glass fiber and carbon fiber according to claim 11, **characterized in that** it further comprises a disc preform (7) adjusted concentrically on the interior contour of a first revolving body (4) of claim 11 and, in turn, said disc preform (7) comprising an inserted interior disc piece (71) of carbon fiber concentric to and fitted in the interior contour of the first revolving body (4), a central metal piece (72) concentric to said first revolving body (4) and arranged on the interior disc piece (71) and another exterior disc piece (76) of carbon fiber concentric to the same first revolving body (4) and arranged on the central piece (72) and coupled and fitted in the interior disc piece (71).

14. The first revolving body with glass fiber and carbon fiber according to claim 13, **characterized in that** it includes a foam or similar in at least one space (18) comprised between the interior disc piece (71) and the exterior disc piece (73).

15. The first revolving body with glass fiber and carbon fiber according to claim 13 or 14, **characterized in that** it is a tire integrating an automotive wheel or similar, the central piece (72) having screw elements (151) enabled for its fixing on a vehicle.

## Patentansprüche

1. Verfahren zur Herstellung eines Drehkörpers mit Glasfaser und Kohlestofffaser, wobei es umfasst:
a) anfängliches Fixieren (101) einer trockenen Glasfaserschicht (1) ohne Vorbehandlung in ihrem Erstkontaktabschnitt auf einer Trommel (2), die um ihre eigene axiale Achse (21) rotiert und die eine zylindrische Geometrie mit einer ebenen und glatten zylindrischen seitlichen Oberfläche aufweist
b) Zuführen und Aufrollen (102) der Glasfaserschicht (1) auf der Trommel (2) und mit einer Ausrichtung der Fäden der Glasfaserschicht (1), die parallel oder schräg zur axialen Achse (21) der Trommel (2) zugeführt werden
c) Unterbrechen (103) der Zufuhr und des Aufrollens (102) der Schicht (1)
d) Durchtrennen (104) der Schicht (1)
e) Einführen und Pressen (105) gebildeter lateraler Formen (51) in der axialen Richtung einer Glasfaserrolle (3), die sich aus den vorherigen Schritten ergibt und an der Trommel (2) haftet, wobei die axiale Richtung mit der Richtung der axialen Achse (21) der Trommel (2) zusammenfällt
f) anfängliches Fixieren mindestens eines trockenen Kohlenstofffaserfadens (6) ohne Vorbehandlung in seinem Erstkontaktbereich auf der Rolle (3)
g) Zuführen und Aufrollen (107) des Kohlenstofffaserfadens (6) um und auf mindestens einem Abschnitt der gebildeten Oberfläche der Rolle (3), also um und auf der gesamten oder partiellen Ausdehnung der geformten Oberfläche derselben Rolle (3), wobei die Ausrichtung der Kohlenstofffaserfäden (6) senkrecht zur axialen Achse (21) der Trommel (2) ist
h) zusammen mit dem Zuführen und Rollen (107) des Kohlenstofffaserfadens (6) erfolgt das Führen (107a) oder die Verteilung des Kohlenstofffaserfadens (6) in Richtung der axialen Achse (21) der Trommel (2)
i) Unterbrechen (108) der Zufuhr und des Aufrollen (107) der Kohlenstofffaserfäden (6)
j) Durchtrennen (109) der zugeführten Kohlenstofffaserfäden (6).
k) Pressen (110) der resultierenden Rolle (3) auf Gegenformen (52), wobei die erzeugte Form beibehalten wird
l) Erwärmen (111) und anschließendes Abkühlen (112) der Rolle (3) mit Glasfaser und Kohlenstofffaser
m) Entfernen (113) der Gegenformen (52) und der lateralen Formen (51) und der Trommel (2)
n) Extrahieren (114) eines resultierenden ersten Drehkörpers (4) aus Glasfaser und Kohlenstofffaser

2. Verfahren zur Herstellung eines Drehkörpers mit Glasfaser und Kohlenstofffaser nach Anspruch 1, **dadurch gekennzeichnet, dass** das anfängliche Fixieren (101) der Glasfaserschicht (1) in ihrem Erstkontaktabschnitt auf der Trommel (2) durch Erzeugen eines Vakuums in der Trommel (2) selbst durchgeführt wird.

3. Verfahren zur Herstellung eines Drehkörpers mit Glasfaser und Kohlenstofffaser nach Anspruch 1, **dadurch gekennzeichnet, dass** das anfängliche Fixieren (101) der Glasfaserschicht (1) in ihrem Erstkontaktabschnitt auf der Trommel (2) durch die Verwendung eines Führungsmittels durchgeführt wird.

4. Verfahren zur Herstellung eines Drehkörpers mit Glasfaser und Kohlenstofffaser nach Anspruch 1, **dadurch gekennzeichnet, dass** das Durchtrennen (104) der zugeführten Glasfaserschicht (1) mittels eines rotierenden Messers durchgeführt wird; das anfängliche Fixieren (106) mindestens eines Kohlenstofffaserfadens (6) in seinem Erstkontaktabschnitt auf der Rolle (3) mittels eines Magnetsystems oder elektromagnetisch erfolgt; das Zuführen und Aufrollen (107) des Kohlenstofffaserfadens (6) um und auf mindestens einem Abschnitt der gebildeten Oberfläche der Rolle (3) mittels eines Filamentwickelprozesses erfolgt; das Erwärmen (111) der Rolle (3) mit Glasfaser und Kohlenstofffaser mit Luft bei 100 °C erfolgt; das Erwärmen (111) und anschließende Abkühlen (112) der Rolle (3) mit Glas- und Kohlenstofffaser nach Imprägnierung mit einem Bindemittel erfolgt.

5. Verfahren zur Herstellung eines Drehkörpers mit Glasfaser und Kohlenstofffaser nach Anspruch 1, **dadurch gekennzeichnet, dass** es ferner das Einsetzen (201) einer bereits hergestellten Scheibenvorform (7) umfasst, die konzentrisch zum ersten Drehkörper (4) an seiner Innenkontur aufgenommen und eingestellt ist, wobei die bereits hergestellte Scheibenvorform (7) eine Sandwichstruktur mit einem inneren Scheibenstück (71) und einem weiteren äußeren Scheibenstück (73) aufweist, die beide aus Kohlenstofffaser hergestellt sind und zwischen denen ein Metallmittelstück (72) angeordnet ist; und das innere Scheibenstück (71) und/oder das Mittelstück (72) und/oder das äußere Scheibenstück (73) durch vorheriges Stanzen erhalten werden.

6. Verfahren zur Herstellung eines Drehkörpers mit Glasfaser und Kohlenstofffaser nach Anspruch 1, **dadurch gekennzeichnet, dass** es auch die Herstellung einer Scheibenvorform (7) umfasst, die wiederum Folgendes umfasst:
a) Positionieren (301) eines inneren Scheibenstücks (71) aus Kohlenstofffaser, das konzentrisch und in die Innenkontur des ersten Drehkörpers (4) eingepasst ist
b) Positionieren (302) eines Metallmittelstücks (72), das konzentrisch zum ersten Drehkörper (4) ist und sich auf dem zuvor angeordneten inneren Scheibenstück (71) befindet
c) Einspritzen (303) von Polyurethanschaum oder ähnlichem auf dem inneren Scheibenstück (71)
d) Positionieren (304) eines weiteren äußeren Scheibenstücks (73) aus Kohlenstofffaser, das konzentrisch zum ersten Drehkörper (4) ist und sich auf dem zuvor angeordneten Mittelstück (72) befindet und mit dem inneren Scheibenstück (71) gekoppelt und in dieses eingepasst ist

7. Verfahren zur Herstellung eines Drehkörpers mit Glasfaser und Kohlenstofffaser nach Anspruch 5 oder 6, **dadurch gekennzeichnet, dass** es ferner umfasst:
a) Positionieren (305) einer an die Innenkontur des ersten Drehkörpers (4) angepassten Innenform (81) im Innenraum
b) Positionieren (306) einer Vielzahl von Außenformen (82), die eingestellt und an die Außenkontur des ersten Drehkörpers (4) und an die unbedeckte Fläche des äußeren Scheibenstücks (73) angepasst sind
c) Abdichten (307) zwischen dem inneren Scheibenstück (71) und dem äußeren Scheibenstück (73) und dem ersten Drehkörper (4) selbst.
d) Druckeinspritzen (308) eines Harzes (17), Epoxids oder ähnlichem zwischen dem inneren Scheibenstück (71) und dem äußeren Scheibenstück (73) und dem ersten Drehkörper (4) selbst
e) Entfernen (309) der Innenform (81) und der Außenformen (82)
f) Extrahieren (310) eines resultierenden Verbunddrehkörpers (5)

8. System zur Herstellung eines Drehkörpers mit Glasfaser und Kohlenstofffaser, das zur Ausführung des Verfahrens nach Anspruch 1 geeignet ist, das Folgendes umfasst:
- eine Glasfaser-Legeeinheit (20)
- eine Kohlenstofffaser-Wickeleinheit (30)
- eine Wärmetauschereinheit (40)
und wobei
- die Glasfaser-Legeeinheit (20) umfasst:
- Mittel zum Zuführen (2001) einer Glasfaserschicht (1) und einer um ihre axiale Achse (21) rotierenden Trommel (2), die eine zylindrische Geometrie mit ebener und glatter zylindrischer lateraler Oberfläche aufweist, wobei das Zuführmittel (2001) und die rotierende Trommel (2) zum Aufrollen der von dem Zuführmittel (2001) zugeführten Glasfaserschicht (1) auf der rotierenden Trommel (2) angeordnet und miteinander verbunden sind, wobei die Ausrichtung der Fäden der Glasfaserschicht (1) parallel oder schräg zur axialen Achse (21) und Rotation der Trommel (2) ist
- Mittel zum Fixieren der ersten und letzten Glasfaserschicht (1)
- Mittel zum Durchtrennen der von dem Zuführmittel (2001) zugeführten Glasfaserschicht (1);
- die Kohlenstofffaser-Wickeleinheit (30) umfasst:
- Zuführmittel (3001) mindestens eines Kohlenstofffaserfadens (6) um und auf mindestens einem Abschnitt der lateralen Oberfläche der resultierenden Glasfaserrolle (3), wobei die Kohlenstofffaserfäden (6) senkrecht zu den Fäden der Glasfaserschicht (1) von der auf der Trommel (2) aufgerollten Rolle (3) zugeführt werden
- Fixiermittel des ersten Kohlenstofffaserfadens (6)
- Durchtrennungsmittel (3003) des Kohlenstofffaserfadens (6);
- wobei die Wärmetauschereinheit (40) umfasst:
- Formmittel, um deren Einführung und Pressung aus einer lateralen Position in der axialen Richtung der resultierenden Glasfaserrolle (3) zu ermöglichen,
- Mittel zum Erwärmen des Innenraums und des Außenraums der Glasfaserrolle (3)

9. System zur Herstellung eines Drehkörpers mit Glasfaser und Kohlenstofffaser nach Anspruch 8, **dadurch gekennzeichnet, dass** das Durchtrennungsmittel ein kreisförmiges Messer umfasst; die Trommel (2) Löcher in ihrer lateralen Oberfläche aufweist und die Legeeinheit (20) ferner Mittel zum Entleeren des Innenraums der Trommel (2) umfasst, die Wickeleinheit (30) Führungsmittel (3002) der Kohlenstofffaserfäden (6) in Richtung der axialen Achse (21) der Trommel (2) umfasst; die Glasfaser-Legeeinheit (20), die Kohlenstofffaser-Wickeleinheit (30) und die Wärmetauscheinheit (40) auf Führungen verschiebbar sind und eine gegenseitige Position zwischen ihnen veränderbar ist.

10. System zur Herstellung eines Drehkörpers mit Glasfaser und Kohlenstofffaser nach Anspruch 8, **dadurch gekennzeichnet, dass** es ferner umfasst:
- eine an die Innenkontur des ersten Drehkörpers (4) angepasste Innenform (81)
- eine Vielzahl von Außenformen (82), die an die Außenkontur des ersten Drehkörpers (4) und an die unbedeckte Fläche des äußeren Scheibenstücks (73) angepasst und für dessen Pressen befähigt sind; und die Außenformen (82) eine durch Luftdruck an die Innenform (81) anpassbare Membran umfassen und daher eine Verformbarkeit aufweisen.
- Mittel zum Erwärmen und Einspritzen von Harz (17)
- Mittel zum Einbringen von Schaum oder ähnlichem in mindestens einen Zwischenraum (18), der zwischen dem inneren Scheibenstück (71) und dem äußeren Scheibenstück (73) enthalten ist

11. Erster Drehkörper mit Glasfaser und Kohlenstofffaser, der aus dem Verfahren zur Herstellung nach Anspruch 1 resultiert, der durch eine Rolle (3) gebildet wird, die durch Aufrollen und Übereinanderlegen einer trockenen Glasfaserschicht (1) ohne vorherige Behandlung entsteht und um eine axiale Achse (121) gerollt wird, wobei die Fäden der Glasfaserschicht (1) parallel oder schräg zu der axialen Achse (121) sind, und wobei sie mindestens einen trockenen Kohlenstofffaserfaden (6) ohne vorherige Behandlung umfasst, der auf der lateralen Oberfläche der Glasfaserrolle (3) angeordnet, aufgerollt ist und an dieser haftet und die laterale Oberfläche der Glasfaserrolle (3) umgibt, wobei die Kohlenstofffaserfäden (6) senkrecht oder schräg zu den Glasfaserfäden der Rolle (3) verlaufen und daher keine Parallelität zwischen ihnen besteht.

12. Erster Drehkörper mit Glasfaser und Kohlenstofffaser nach Anspruch 11, **dadurch gekennzeichnet, dass** er eine flaschenartige Geometrie oder ähnliches aufweist und in seinem Inneren zum Befördern von Fluida befähigt ist.

13. Erster Drehkörper mit Glasfaser und Kohlenstofffaser nach Anspruch 11, **dadurch gekennzeichnet, dass** er ferner eine konzentrisch an die Innenkontur eines ersten Drehkörpers (4) nach Anspruch 11 angepasste Scheibenvorform (7) umfasst, wobei die Scheibenvorform (7) wiederum ein eingesetztes inneres Scheibenstück (71) aus Kohlenstofffaser umfasst, das konzentrisch und in die Innenkontur des ersten Drehkörpers (4) eingepasst ist, ein Metallmittelstück (72), das konzentrisch zu dem ersten Drehkörper (4) und auf dem inneren Scheibenstück (71) angeordnet ist, und ein weiteres äußeres Scheibenstück (76) aus Kohlenstofffaser, das konzentrisch zu demselben ersten Drehkörper (4) ist und auf dem Mittelstück (72) angeordnet ist und in das innere Scheibenstück (71) gekoppelt und eingepasst ist.

14. Erster Drehkörper mit Glasfaser und Kohlenstofffaser nach Anspruch 13, **dadurch gekennzeichnet, dass** er einen Schaum oder ähnliches in mindestens einem Zwischenraum (18) enthält, der zwischen dem inneren Scheibenstück (71) und dem äußeren Scheibenstück (73) enthalten ist.

15. Erster Drehkörper mit Glasfaser und Kohlenstofffaser nach Anspruch 13 oder 14, **dadurch gekennzeichnet, dass** es sich um einen Reifen handelt, der ein Kraftfahrzeugrad oder ähnliches integriert, wobei das Mittelstück (72) Schraubelemente (151) aufweist, die zu seiner Fixierung an einem Fahrzeug befähigt sind.

## Revendications

1. Procédé de fabrication d'un corps de révolution avec de la fibre de verre et de la fibre de carbone, dans lequel il comprend :
a) fixer (101) initialement une couche (1) de fibres de verre sèche sans traitement préalable dans sa section de contact initiale sur un tambour (2) qui tourne sur son propre axe axial (21) et qui présente une géométrie cylindrique avec une surface latérale cylindrique plane et lisse
b) approvisionner et enrouler (102) la couche (1) de fibres de verre sur le tambour (2) et avec une orientation des filatures de la couche (1) de fibres de verre approvisionnée parallèle ou oblique à l'axe axial (21) dudit tambour (2)
c) interrompre (103) l'approvisionnement et l'enroulage (102) de la couche (1)
d) sectionner (104) la couche (1)
e) introduire et presser (105) des moules latéraux (51) formés dans la direction axiale d'un rouleau (3) de fibres de verre résultant des étapes précédentes et collé au tambour (2), ladite direction axiale coïncidant avec la direction de l'axe axial (21) du tambour (2)
f) fixer initialement au moins une filature (6) de fibre de carbone sèche sans traitement préalable dans sa section de contact initial sur le rouleau (3)
g) approvisionner et enrouler (107) la filature (6) de fibres de carbone autour et sur au moins une section de la surface formée du rouleau (3), donc autour et sur l'étendue totale ou partielle de la surface formée d'un même rouleau (3), l'orientation des filatures (6) de fibres de carbone étant perpendiculaire à l'axe axial (21) du tambour (2)
h) conjointement avec l'approvisionnement et l'enroulage (107) de la filature (6) de fibre de carbone, le guidage (107a) ou la distribution de la filature (6) de fibre de carbone s'effectue également en direction de l'axe axial (21) du tambour (2)
i) interrompre (108) l'approvisionnement et l'enroulage (107) des filatures (6) de fibres de carbone
j) sectionner (109) les filatures (6) de fibres de carbone approvisionnées
k) presser (110) le rouleau (3) résultant sur des contre-moules (52) maintenant la forme produite
l) chauffer (111) et puis refroidir (112) le rouleau (3) avec de la fibre de verre et de la fibre de carbone
m) retirer (113) les contre-moules (52) et les moules latéraux (51) et le tambour (2)
n) extraire (114) un premier corps de révolution (4) résultant en fibre de verre et en fibre de carbone

2. Procédé de fabrication d'un corps de révolution avec de la fibre de verre et de la fibre de carbone selon la revendication 1, **caractérisé en ce que** la fixation (101) initiale de la couche (1) de fibres de verre dans sa section de contact initiale sur le tambour (2) est réalisée au moyen de la génération d'un vide dans le tambour (2) lui-même.

3. Procédé de fabrication d'un corps de révolution avec de la fibre de verre et de la fibre de carbone selon la revendication 1, **caractérisé en ce que** la fixation initiale (101) de la couche (1) de fibres de verre dans sa section initiale de contact sur le tambour (2) est réalisée au moyen de l'utilisation d'un moyen de collage.

4. Procédé de fabrication d'un corps de révolution avec de la fibre de verre et de la fibre de carbone selon la revendication 1, **caractérisé en ce que** le sectionnement (104) de la couche (1) de fibres de verre approvisionnée est effectué au moyen de l'utilisation d'une lame rotative ; la fixation initiale (106) d'au moins une filature (6) de fibres de carbone dans sa section initiale de contact sur le rouleau (3) s'effectue au moyen d'un système d'aimants ou par voie électromagnétique ; l'approvisionnement et l'enroulage (107) de la filature (6) de fibre de carbone autour et sur au moins une section de la surface formée du rouleau (3) s'effectuent au moyen d'un processus d'enroulement filamentaire ; le chauffage (111) du rouleau (3) avec de la fibre de verre et de la fibre de carbone a lieu avec de l'air à 100 °C ; le chauffage (111) et le refroidissement (112) ultérieur du rouleau (3) avec de la fibre de verre et de la fibre de carbone ont lieu après l'imprégnation avec un liant.

5. Procédé de fabrication d'un corps de révolution avec de la fibre de verre et de la fibre de carbone selon la revendication 1, **caractérisé en ce qu'**il comprend en outre l'insertion (201) d'une préforme de disque (7) déjà fabriquée, qui est rapportée et ajustée concentriquement au premier corps de révolution (4) sur son contour intérieur, ladite préforme de disque (7) déjà fabriquée ayant une structure en sandwich avec une pièce de disque intérieure (71) et une autre pièce de disque extérieure (73) toutes deux réalisées en fibre de carbone, et entre lesquelles une pièce métallique centrale (72) est située ; et la pièce de disque intérieur (71) et/ou la pièce centrale (72) et/ou la pièce de disque extérieur (73) sont obtenus au moyen d'un emboutissage préalable.

6. Procédé de fabrication d'un corps de révolution avec de la fibre de verre et de la fibre de carbone selon la revendication 1, **caractérisé en ce qu'**il comprend également la fabrication d'une préforme de disque (7), qui, à son tour, comprend :
a) positionner (301) une pièce de disque intérieur (71) en fibre de carbone, concentrique et emmanché dans le contour intérieur du premier corps de révolution (4)
b) positionner (302) une pièce métallique centrale (72), concentrique au premier corps de révolution (4) et sur la pièce de disque intérieur (71) disposée précédemment
c) injecter (303) de la mousse de polyuréthane ou similaire sur la pièce de disque intérieur (71)
d) positionner (304) une autre pièce de disque extérieur (73) en fibre de carbone, concentrique au premier corps de révolution (4) et sur la pièce centrale (72) disposée précédemment, et couplée et emmanchée dans la pièce de disque intérieur (71)

7. Procédé de fabrication d'un corps de révolution avec de la fibre de verre et de la fibre de carbone selon la revendication 5 ou 6, **caractérisé en ce qu'**il comprend en outre :
a) positionner (305) un moule intérieur (81) à l'intérieur et adapté au contour intérieur du premier corps de révolution (4)
b) positionner (306) une pluralité de moules externes (82) ajustés et adaptés sur le contour extérieur du premier corps de révolution (4) et sur la face découverte de la pièce de disque extérieur (73)
c) sceller (307) entre la pièce de disque intérieur (71) et la pièce de disque extérieur (73) et le premier corps de révolution (4) lui-même
d) injecter sous pression (308) une résine (17) époxy ou similaire entre la pièce de disque intérieure (71) et la pièce de disque extérieure (73) et le premier corps de révolution (4) lui-même
e) retirer (309) le moule intérieur (81) et les moules externes (82)
f) extraire (310) un corps composite de révolution (5) résultant

8. Système de fabrication d'un corps de révolution avec de la fibre de verre et de la fibre de carbone adapté à l'exécution du procédé de la revendication 1, qui comprend :
- une unité de stratification de fibres de verre (20)
- une unité d'emballage de fibre de carbone (30)
- une unité d'échange de chaleur (40)
et par lequel
- l'unité de stratification de fibres de verre (20) comprend :
- des moyens d'approvisionnement (2001) d'une couche (1) de fibres de verre et un tambour (2) tournant sur son axe axial (21), qui présente une géométrie cylindrique avec une surface latérale cylindrique plane et lisse, les moyens d'approvisionnement (2001) et le tambour rotatif (2) étant agencés et reliés mutuellement pour l'enroulage sur le tambour rotatif (2) de la couche (1) de fibres de verre approvisionnée depuis les moyens d'approvisionnement (2001), l'orientation des filatures de la couche (1) de fibres de verre étant approvisionnée parallèlement ou obliquement à l'axe axial (21) et la rotation du tambour (2).
- des moyens de fixation de la première et de la dernière couche (1) de fibres de verre.
- des moyens pour sectionner la couche (1) de fibres de verre approvisionnée depuis les moyens d'approvisionnement (2001) ;
- l'unité d'emballage de fibre de carbone (30) comprend :
- des moyens d'approvisionnement (3001) d'au moins une filature (6) de fibres de carbone autour et sur au moins une section de la surface latérale du rouleau (3) de fibres de verre résultant, les filatures (6) de fibres de carbone étant approvisionnées perpendiculairement aux filatures de la couche (1) de fibres de verre à partir du rouleau (3) enroulé sur le tambour (2)
- des moyens de fixation de la première filature (6) de fibre de carbone
- des moyens de sectionnement (3003) de la filature (6) de fibres de carbone;
- l'unité d'échange thermique (40) comprend:
- des moyens de moulage pour permettre son introduction et son pressage depuis une position latérale dans la direction axiale du rouleau (3) de fibres de verre résultant,
- des moyens de chauffage depuis l'intérieur et l'extérieur du rouleau (3) de fibres de verre.

9. Système de fabrication d'un corps de révolution avec de la fibre de verre et de la fibre de carbone selon la revendication 8, **caractérisé en ce que** les moyens de sectionnement comprennent une lame circulaire ; le tambour (2) présente des trous dans sa surface latérale, et l'unité de stratification (20) comprend en outre des moyens pour vider l'intérieur du tambour (2), l'unité d'emballage (30) comprend des moyens de guidage (3002) des filatures (6) de fibres de carbone dans la direction de l'axe axial (21) du tambour (2) ; l'unité de stratification de fibres de verre (20), l'unité d'emballage de fibres de carbone (30) et l'unité d'échange de chaleur (40) sont déplaçables sur des guides et avec une position mutuelle variable entre elles.

10. Système de fabrication d'un corps de révolution avec de la fibre de verre et de la fibre de carbone selon la revendication 8, **caractérisé en ce qu'**il comprend en outre :
- un moule intérieur (81) adapté au contour intérieur du premier corps de révolution (4)
- une pluralité de moules externes (82) adaptés au contour extérieur du premier corps de révolution (4) et à la face découverte de la pièce de disque extérieur (73) et aptes à son pressage ; et les moules externes (82) comprennent une membrane adaptable par pression d'air au moule intérieur (81) et présentent donc une déformabilité
- des moyens de chauffage et d'injection de résine (17)
- des moyens pour insérer de la mousse ou similaire dans au moins un espace (18) compris entre la pièce de disque intérieur (71) et la pièce de disque extérieur (73)

11. Premier corps de révolution avec de la fibre de verre et de la fibre de carbone résultant du procédé de fabrication selon la revendication 1, qui est formé par un rouleau (3) résultant de l'enroulage et de la superposition d'une couche (1) de fibres de verre sèche sans traitement préalable et enroulée autour d'un axe axial (121), les filatures de la couche (1) de fibres de verre étant parallèles ou obliques audit axe axial (121), et dans lequel il comprend au moins une filature (6) de fibre de carbone sèche agencée sans traitement préalable, enroulée et collée sur la surface latérale du rouleau (3) de fibres de verre et entourant la surface latérale du rouleau (3) de fibres de verre, les filatures (6) de fibres de carbone étant perpendiculaires ou obliques aux filatures de fibres de verre du rouleau (3), et donc sans parallélisme entre eux.

12. Premier corps de révolution avec de la fibre de verre et de la fibre de carbone selon la revendication 11, **caractérisé en ce qu'**il présente une géométrie de type bouteille ou similaire et est apte à transporter des fluides à l'intérieur.

13. Premier corps de révolution avec de la fibre de verre et de la fibre de carbone selon la revendication 11, **caractérisé en ce qu'**il comprend en outre une préforme de disque (7) ajustée concentriquement sur le contour intérieur d'un premier corps de révolution (4) selon la revendication 11 et, à son tour, ladite préforme de disque (7) comprenant une pièce de disque intérieure insérée (71) en fibre de carbone concentrique à et ajustée dans le contour intérieur du premier corps de révolution (4), une pièce métallique centrale (72) concentrique audit premier corps de révolution (4) et disposée sur la pièce de disque intérieur (71) et une autre pièce de disque extérieure (76) en fibre de carbone concentrique au même premier corps de révolution (4) et disposée sur la pièce centrale (72) et couplée et emmanchée dans la pièce de disque intérieure (71).

14. Premier corps de révolution avec de la fibre de verre et de la fibre de carbone selon la revendication 13, **caractérisé en ce qu'**il comprend une mousse ou similaire dans au moins un espace (18) compris entre la pièce de disque intérieur (71) et la pièce de disque extérieur (73).

15. Premier corps de révolution avec de la fibre de verre et de la fibre de carbone selon la revendication 13 ou 14, **caractérisé en ce qu'**il s'agit d'un pneumatique intégrant une roue d'automobile ou similaire, la pièce centrale (72) comportant des éléments de vis (151) permettant sa fixation sur un véhicule.
